# EUROPÄISCHE PATENTANMELDUNG

(11) **EP 1 715 667 A1**
(43) Veröffentlichungstag der Anmeldung: **25.10.2006**
(21) Anmeldenummer: 06004441.9
(22) Anmeldetag: 04.03.2006
(51) Int. Cl.: H04M 3/20, H04M 3/436

(54) **Verfahren zur Vermeidung einer gegenseitigen Blockierung von in einer Nachrichtensenke eines Telekommunikationsnetzes eingehenden Sprach- oder Datenrufen**

(30) Priorität: 20.04.2005 DE 102005018420
(71) Anmelder: DB Telematik GmbH, 65760 Eschborn (DE)
(72) Erfinder: Masur, Dieter, 61476 Kronberg/Taunus (DE); Rösler, Burkhard, 65817 Eppstein/Taunus (DE)
(74) Vertreter: Zinken-Sommer, Rainer

(57) **Zusammenfassung**

Die Erfindung betrifft ein Verfahren zur Vermeidung einer gegenseitigen Blockierung von in einer Nachrichtensenke eines Telekommunikationsnetzes eingehenden Sprach- oder Datenrufen, welches auch bei einer stark eingeschränkten Anzahl von Signalisierungsressourcen in der Nachrichtensenke eine hohe Annahme-Wahrscheinlichkeit für hoch priorisierte Rufe gewährleisten soll. Hierzu werden
■ mindestens ein Datenelement aus der dem eingehenden Sprach- oder Datenruf zugehörigen Verbindungsaufbaunachricht sowie ein den aktuellen Aktivitätsstatus der Nachrichtensenke charakterisierendes Datenelement an eine Applikation des Telekommunikationsnetzes übertragen,
■ das mindestens eine Datenelement der Verbindungsaufbaunachricht dort in Abhängigkeit vom Aktivitätsstatus der Nachrichtensenke einem Vergleich mit vorgebbaren Zulässigkeitskriterien, welche in einer der Applikation zugeordneten Datenbasis vorgehaltenen werden, unterzogen,
■ der eingehende Sprach- oder Datenruf bei fehlender Identität des Zulässigkeitskriteriums mit der Vorgabegröße durch die Applikation abgewiesen beziehungsweise bei erfüllter Identität des Zulässigkeitskriteriums mit der Vorgabegröße durch die Applikation angenommen
■ sowie der Signalisierungskanal sofort weiteren eingehenden Rufen zur Verfügung gestellt.

## Beschreibung

Die Erfindung betrifft ein Verfahren zur Vermeidung einer gegenseitigen Blockierung von in einer Nachrichtensenke eines Telekommunikationsnetzes eingehenden Sprach- oder Datenrufen.

Die in Telekommunikationsnetzen zum Einsatz kommenden Übertragungsmedien weisen physikalisch bedingt begrenzte Kapazitäten auf. Dies trifft auch auf die Übertragungsressourcen für Signalisierungen ankommender Sprach- bzw. Datenrufe in Richtung auf die Nachrichtensenke zu. In vielen Fällen steht an einer Nachrichtensenke nur ein Signalisierungskanal für ankommende Rufe zur Verfügung.
Solange sich ein erster an einer Nachrichtensenke eingehender Ruf im Status der Anrufsignalisierung befindet und damit den einzigen zur Verfügung stehenden Signalisierungskanal belegt, können weitere Rufe an die Applikation des Telekommunikationsnetzes nicht signalisiert werden, selbst wenn sie eine höhere Rufpriorität als dieser erste Ruf aufweisen.

Aus dem Stand der Technik sind Telekommunikationsanlagen bekannt, bei denen ankommende Rufe generell angenommen und - im Fall dass der Kommunikationspartner z.B. nicht erreichbar ist - ohne Berücksichtigung ihrer eventuell unterschiedlichen Priorisierung in eine Warteschleife gelegt werden. Ein solches System vermeidet zwar formal betrachtet eine gegenseitige Blockierung einzelner Rufe. Jedoch ist keineswegs sichergestellt, dass die von einer Nachrichtenquelle abgegebenen Rufe tatsächlich in einem mit hinreichender Wahrscheinlichkeit bestimmbaren zeitlichen Rahmen ihr Ziel erreichen.
Andere bekannte Telekommunikationsanlagen halten eine diskrete Anzahl von Übertragungsressourcen für eventuell eingehende Rufe mit einer definierten (üblicherweise hohen) Priorität frei. Auf diese Weise ist es zwar möglich, die Wahrscheinlichkeit für die gegenseitige Blockade eingehender Rufe zu erhöhen. Allerdings ist dies nur durch das parallele Bereitstellen einer Mehrzahl von Übertragungsressourcen möglich. Hinreichend gute Wahrscheinlichkeiten werden nur mit einem überproportional hohen Aufwand erzielt. Der überwiegende Anteil der Übertragungsressourcen wird im Normalbetrieb kaum genutzt und nur als Notfallreserve vorgehalten. Dieses Konzept führt zu hohen Anlagekosten und ist unwirtschaftlich.

Der Erfindung liegt die Aufgabe zugrunde, ein Verfahren zur Vermeidung einer gegenseitigen Blockierung von in einer Nachrichtensenke eines Telekommunikationsnetzes eingehenden Sprach- oder Datenrufen anzugeben, welches auch bei einer stark eingeschränkten Anzahl von Signalisierungsressourcen in der Nachrichtensenke eine hohe Annahme-Wahrscheinlichkeit für hoch priorisierte Rufe gewährleistet.

Diese Aufgabe wird in Verbindung mit dem Oberbegriff des Patentanspruches 1 erfindungsgemäß dadurch gelöst, dass
■ mindestens ein Datenelement aus der dem eingehenden Sprach- oder Datenruf zugehörigen Verbindungsaufbaunachricht sowie ein den aktuellen Aktivitätsstatus der Nachrichtensenke charakterisierendes Datenelement an eine Applikation des Telekommunikationsnetzes übertragen werden,
■ das mindestens eine Datenelement der Verbindungsaufbaunachricht dort in Abhängigkeit vom Aktivitätsstatus der Nachrichtensenke einem Vergleich mit vorgebbaren Zulässigkeitskriterien, welche in einer der Applikation zugeordneten Datenbasis vorgehaltenen werden, unterzogen wird,
■ der eingehende Sprach- oder Datenruf bei fehlender Identität des Zulässigkeitskriteriums mit der Vorgabegröße durch die Applikation abgewiesen beziehungsweise bei erfüllter Identität des Zulässigkeitskriteriums mit der Vorgabegröße durch die Applikation angenommen wird
■ sowie der Signalisierungskanal sofort weiteren eingehenden Rufen zur Verfügung gestellt wird.
Auf diese Weise wird eine extrem kurze Belegung des Signalisierungskanals ermöglicht, sodass weitere ankommende Sprach- und Datenrufe jederzeit signalisiert werden können und somit kein ankommender Ruf verloren geht. Wenn zum Zeitpunkt des Rufeingangs kein weiterer, bereits aktiver Ruf vorliegt, so kann der eingehende Ruf auch bei Nicht-Erfüllen des Zulässigkeitskriteriums unverzüglich angenommen und der Signalisierungskanal somit frei gehalten werden. Falls zum Zeitpunkt des Rufeingangs jedoch ein solcher, das Zulässigkeitskriterium nicht-erfüllender Ruf aktiv ist, so wird dieser bei einem eingehenden und das Zulässigkeitskriterium erfüllenden Ruf zu dessen Gunsten getrennt.

Gemäss einer sinnvollen Ausgestaltung wird die Anruferkennung (z.B. in Form der physikalischen Rufnummer) der rufenden Nachrichtenquelle in das mindestens eine Datenelement der Verbindungsaufbaunachricht integriert.

Auf diese Weise kann durch Nutzung einer für das Netz definierten Standardinformation die Grundlage für eine benutzerselektive Entscheidung über die Annahme beziehungsweise Abweisung eines Sprach- oder Datenrufes geschaffen werden.

In alternativer oder ergänzender Weise hierzu kann vorgesehen werden, dass ein von der Nachrichtenquelle zur Nachrichtensenke zu übertragendes Informationselement in das mindestens eine Datenelement der Verbindungsaufbaunachricht integriert wird.
Derartige Informationen werden von einer Nachrichtenquelle (z.B. Netzelement oder Applikation) in unabhängiger und vom Netz nicht beeinflussbarer Art und Weise erzeugt. Hierbei kann es sich beispielsweise um Orts- und / oder Zeitdaten sowie funktionale Identitäten handeln.
Auf diese Weise ist es möglich, dass die Entscheidung der Applikation des Telekommunikationsnetzes über die Annahme bzw. Ablehnung des Sprach- oder Datenrufes auf einer freien Definition des Applikationsentwicklers basiert.

Desweiteren sieht das erfindungsgemäße Verfahren vor, dass die Priorität des Rufes in das mindestens eine Datenelement der Verbindungsaufbaunachricht integriert wird.
Somit ist es möglich, dass die Entscheidung über die Annahme bzw. die Abweisung des Sprach- oder Datenrufes nicht benutzerselektiv sondern in Abhängigkeit von einer dem Sprach- bzw. Datenruf innewohnenden Eigenschaft durchgeführt werden kann.

Eine weitere Ausführungsform sieht vor, dass technische Parameter des Sprach- oder Datenrufes in das mindestens eine Datenelement der Verbindungsaufbaunachricht integriert werden.
Auf diese Weise können netzspezifisch festgelegte Kriterien ― wie beispielsweise Datenrate, Datencode oder Service-Identifikator (Sprache, Daten, Fax) ― als Grundlage für das erfindungsgemäße Entscheidungsverfahren herangezogen werden. Somit kann auf eine gesonderte Definition des Entscheidungskriteriums verzichtet werden.

### Der Erfindungsgedanke wird in nachfolgendem Ausführungsbeispiel erläutert:

In einem Unternehmen wird ein neues betriebliches Kommunikationsnetz eingeführt. In diesem betrieblichen Netz sind an Meßstellen von Füllbehältern sogenannte Füllstandswächter eingebaut, die über mobile Kommunikationsgeräte nach dem GSM-Standard an das neue betrieblichen Kommunikationsnetzwerk angebunden sind. Die Füllstände müssen in Echtzeit abgerufen werden können. Hierzu baut eine Nachrichtenquelle der sogenannten Füllstandsapplikationsquelle alle 10 Minuten einen Datenruf auf 9600 Bit/s zur zuvor genannten jeweiligen mobilen Füllstandsmeßsenke auf und übergibt den aktuell gemessenen Füllstand in Form eines vorderfinierten Datenstroms. Diese Rufe sollen vor allen anderen Rufen Vorrang haben. Parallel dazu müssen auch normale betriebliche Gespräche zulässig sein.
Dabei gibt es drei Kategorien der Auswertung der ankommenden Datenrufe bei der Füllstandsapplikationsenke, die in die Applikation eingepflegt wurden:
a) es werden vorrangig Datenrufe mit der CLI 88059988 (CLI = calling line identity) angenommen
b) es werden alle Datenrufe angenommen, die im UUIE den Code "XY12367" mitsenden (UUIE = user to user information element)
c) es werden alle Datenrufe angenommen, die im UUIE einen Wertebereich von Ort xxx-yyy bis Ort rrr-ttt als Geo-Koordinaten mitliefern.
Alle Rufe, die diese Kriterien erfüllen, werden angenommen.
Wenn an einem solchen mobilen Anschluß - unter Nutzung der Füllstandsnachrichtensenke als Endgerät - während eines innerbetrieblichen Sprachrufes ein Datenruf mit der CLI 88059988 an der Füllstandsnachrichtensenke eingeht, werden durch die Füllstandsnachrichtensenke basierend auf der im Telekommunikationssystem implementierten Prioritätssteuerung der Sprachruf automatisch beendet und der Datenruf von der Applikation automatisch angenommen. Die Füllstandsapplikation übermittelt nun die Füllstandsdaten per Datenstrom an die Nachrichtenquelle. Bei zwischenzeitlich eingehenden weiteren Rufen, die die Auswertekriterien nicht erfüllen (z.B. ein Sprachruf mit der CLI 8002002), erhält die Applikation die entsprechenden für die Rufe relevanten Daten. Auf der Basis des intern durchgeführten Vergleichs weist die Applikation diesen Ruf wegen Nicht-Erfüllung der Kriterien ab und hält so den Signalisierungskanal für weitere hereinkommende Rufe frei. Anschließend kommt ein zweiter Datenruf mit dem UUIE-Inhalt "XY12367" an der Füllstandsnachrichtensenke an, während der erste Datenruf, der die Kriterien erfüllt, ebenfalls noch aktiv ist. Die Füllstandsnachrichtensenke erkennt aufgrund des internen Parametervergleichs, dass der zweite Ruf die gestellten Kriterien erfüllt, und überführt diesen sofort auf Halten, weil bereits ein aktiver und noch nicht beendeter erster Ruf existiert. Somit wird der Signalisierungskanal weiterhin frei gehalten. Weiterhin werden an der Füllstandsnachrichtensenke eingehende Rufe, die die Kriterien nicht erfüllen, von der Füllstandsnachrichtensenke abgewiesen. Anschließend geht ein dritter Datenruf mit den Ortskoordinaten xxx-yyy an der Füllstandsnachrichtensenke ein. Da ein erster Ruf bereits aktiv ist und ein zweiter Ruf auf Halten liegt - und somit keine weiteren Ressourcen mehr frei sind - weist die Füllstandsnachrichtensenke den Ruf nun nicht ab, sondern lässt ihn in der Warteliste in einem sogenannten ALERT-Zustand. Ab diesem Zeitpunkt werden alle an der Füllstandsnachrichtensenke eingehenden Rufe abgewiesen, weil die Ressourcen nun durch Datenrufe, die die Kriterien erfüllen, voll belegt sind. Sobald der erste Datenruf aufgrund der Beendigung der Datenübertragung beendet wird und eine Übertragungsressource wieder frei ist, wird der auf Halten gelegte zweite Datenruf in einen aktiven Zustand geschaltet und der in der Warteliste vorhandene dritte Ruf auf Halten gelegt. Der Signalisierungskanal ist nun wieder frei und kann für weitere Rufe verwendet werden. Ohne des erfindungsgemäßen Verfahrens wären alle eingehenden zweiten und dritten Rufe abgewiesen worden, weil die Übertragungsressource bereits durch einen ersten Sprachruf belegt war. Mit dem dargestellten erfinderischen Verfahren ist indes die Verwaltung dreier eingehender Datenrufe zu bewerkstelligen.

## Patentansprüche

1. Verfahren zur Vermeidung einer gegenseitigen Blockierung von in einer Nachrichtensenke eines Telekommunikationsnetzes eingehenden Sprach- oder Datenrufen,
**dadurch gekennzeichnet, dass**
■ mindestens ein Datenelement aus der dem eingehenden Sprach- oder Datenruf zugehörigen Verbindungsaufbaunachricht sowie ein den aktuellen Aktivitätsstatus der Nachrichtensenke charakterisierendes Datenelement an eine Applikation des Telekommunikationsnetzes übertragen werden,
■ das mindestens eine Datenelement der Verbindungsaufbaunachricht dort in Abhängigkeit vom Aktivitätsstatus der Nachrichtensenke einem Vergleich mit vorgebbaren Zulässigkeitskriterien, welche in einer der Applikation zugeordneten Datenbasis vorgehaltenen werden, unterzogen wird,
■ der eingehende Sprach- oder Datenruf bei fehlender Identität des Zulässigkeitskriteriums mit der Vorgabegröße durch die Applikation abgewiesen beziehungsweise bei erfüllter Identität des Zulässigkeitskriteriums mit der Vorgabegröße durch die Applikation angenommen wird
■ sowie der Signalisierungskanal sofort weiteren eingehenden Rufen zur Verfügung gestellt wird.

2. Verfahren zur Vermeidung einer gegenseitigen Blockierung von in einer Nachrichtensenke eines Telekommunikationsnetzes eingehenden Sprach- oder Datenrufen nach Anspruch 1, **dadurch gekennzeichnet, dass** die Anruferkennung der rufenden Nachrichtenquelle in das mindestens eine Datenelement der Verbindungsaufbaunachricht die physikalische Rufnummer der rufenden Nachrichtenquelle integriert wird.

3. Verfahren zur Vermeidung einer gegenseitigen Blockierung von in einer Nachrichtensenke eines Telekommunikationsnetzes eingehenden Sprach- oder Datenrufen nach Anspruch 1 oder 2, **dadurch gekennzeichnet, dass** ein von der Nachrichtenquelle zur Nachrichtensenke zu übertragendes Informationselement in das mindestens eine Datenelement der Verbindungsaufbaunachricht integriert wird.

4. Verfahren zur Vermeidung einer gegenseitigen Blockierung von in einer Nachrichtensenke eines Telekommunikationsnetzes eingehenden Sprach- oder Datenrufen nach einem der Ansprüche 1 bis 3, **dadurch gekennzeichnet, dass** die Priorität des Rufes in das mindestens eine Datenelement der Verbindungsaufbaunachricht integriert wird.

5. Verfahren zur Vermeidung einer gegenseitigen Blockierung von in einer Nachrichtensenke eines Telekommunikationsnetzes eingehenden Sprach- oder Datenrufen nach einem der Ansprüche 1 bis 4, **dadurch gekennzeichnet, dass** technische Parameter des Sprach- oder Datenrufes in das mindestens eine Datenelement der Verbindungsaufbau
